(19) Europäisches Patentamt
European Patent Office
Office européen des brevets

(11) **EP 2 672 614 A1**

(12) **EUROPEAN PATENT APPLICATION**
published in accordance with Art. 153(4) EPC

(43) Date of publication:
**11.12.2013 Bulletin 2013/50**

(51) Int Cl.:
**H02K 3/34** (2006.01)    **H01B 3/30** (2006.01)

(21) Application number: **12742715.1**

(86) International application number:
**PCT/JP2012/052401**

(22) Date of filing: **02.02.2012**

(87) International publication number:
**WO 2012/105650 (09.08.2012 Gazette 2012/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2011   JP 2011022196**
**01.02.2012   JP 2012019948**

(71) Applicant: **Nitto Denko Corporation**
**Ibaraki-shi,**
**Osaka 567-8680 (JP)**

(72) Inventors:
• **KASAGI, Tomoyuki**
**Ibaraki-shi**
**Osaka 567-8680 (JP)**
• **UKEI, Hiroichi**
**Ibaraki-shi**
**Osaka 567-8680 (JP)**

• **KIRA, Yoshiko**
**Ibaraki-shi**
**Osaka 567-8680 (JP)**
• **SUTOU, Takeshi**
**Ibaraki-shi**
**Osaka 567-8680 (JP)**
• **AKIYAMA, Keiko**
**Ibaraki-shi**
**Osaka 567-8680 (JP)**
• **YAKUWA, Shinpei**
**Ibaraki-shi**
**Osaka 567-8680 (JP)**
• **IKENAGA, Hiroko**
**Ibaraki-shi**
**Osaka 567-8680 (JP)**

(74) Representative: **Sajda, Wolf E.**
**Meissner, Bolte & Partner GbR**
**Postfach 86 06 24**
**D-81633 München (DE)**

(54) **ELECTRICALLY INSULATING RESIN SHEET FOR MOTORS AND PROCESS FOR PRODUCTION THEREOF**

(57)    Provided are: an electrically insulating resin sheet for motors, which is used for achieving the insulation between coil wires or between a coil wire and an iron core in a motor, and which has high heat resistance, high electrical insulation performance and a high insulation breakdown voltage; and a process for producing the electrically insulating resin sheet. The electrically insulating resin sheet for motors, which is provided with a porous resin layer comprising a thermoplastic resin, is characterized in that the resin sheet has a relative permittivity of 2.0 or less at 1 GHz. It is preferred that the porous resin layer has an average cell diameter of 5.0 $\mu$m or less and contains cells in such an amount that the porosity is 30 % or more.

Fig.1
(a)
(b)
(c)
(d)

EP 2 672 614 A1

**Description**

TECHNICAL FIELD

The present invention relates to an electrically insulating resin sheet for motors and a process for production thereof.

BACKGROUND ART

Conventionally, an electrically insulating resin sheet for motors has been known as an insulating member used for achieving an insulation between coil wires or between a coil wire and an iron core in a motor. These materials are required to achieve the desired electrical insulation between coil wires or between a coil wire and an iron core, but when a motor is run at a high-output, the current density increases and the temperature becomes high, and therefore, a heat-resistant insulating member has been proposed (see, for example, Patent Documents 1 and 2).

In addition, in recent years, for energy saving and miniaturized high performance, inverter control at a high voltage is required for motors. However, when controlling the motor drive by using an inverter power source, a high surge voltage generated from the inverter enters the motor. For this reason, it was necessary to suppress the deterioration of the insulating member used in the motor for the purpose of withstanding such a surge voltage.

As a method of suppressing the deterioration of the insulating member caused by a surge voltage, there are considered to be

(1) a method to prolong lifetime leading to insulation breakdown even when a partial discharge by the surge voltage occurs, and
(2) a method to maintain the partial discharge inception voltage at a higher level than the surge voltage.

In the case of (1), there is a method of adding inorganic fillers to an insulating member, but a problem occurs, such that the flexibility of the resin sheet is reduced and insulation characteristics are decreased when the stress by the molding processing is added.

In the case of (2), if the partial discharge inception voltage of the insulating member is equivalent to or higher than the surge voltage, a corona discharge does not occur and the lifetime of the insulating member becomes longer, but it is necessary to thicken the insulating member in order to increase the partial discharge inception voltage, and in this case, there is a problem such that a high output is not obtained because the coil space factor is reduced in the motor.

PRIOR ART DOCUMENTS

PATENT DOCUMENTS

Patent Document 1: JP-A-9-023 601
Patent Document 2: JP-A-2006-321 183

SUMMARY OF THE INVENTION

PROBLEMS TO BE SOLVED BY THE INVENTION

The present invention was made in view of the above problems, and an object of the present invention is to provide an electrically insulating resin sheet for motors, which has high heat resistance, high electrical insulation performance and high partial discharge inception voltage; and a process for production thereof.

MEANS FOR SOLVING THE PROBLEMS

As described above, when using an inverter power source, a high partial discharge inception voltage is effective against a sudden surge voltage. Thus, the present inventors have focused on achieving a high heat-resistance and a low permittivity of an insulating member between coil wires or between a coil wire and an iron core as one approach to increase a partial discharge interception voltage without changing the thickness of the insulating member. The present invention has been completed based on these findings.

Namely, the present invention provides an electrically insulating resin sheet for motors, which has a porous resin layer containing a thermoplastic resin, wherein the resin sheet has a relative permittivity of 2.0 or less at 1 GHz.

In the electrically insulating resin sheet for motors according to the present invention, the porous resin layer has suitably an average cell diameter of 5.0 μm or less and suitably contains cells in such an amount that the porosity is 30 % or more. In addition, the thermoplastic resin is preferably any one selected from polyimide, polyether imide, and polyether sulfone. Furthermore, the thermoplastic resin is suitably a mixture of two or more kinds of thermoplastic resins that are different in the glass transition temperature.

In the electrically insulating resin sheet for motors according to the present invention, there is provided an electrically insulating resin sheet for motors, wherein a sheet material is provided on at least one surface of the porous resin layer.

Further, in the present invention, there is provided a process for producing an electrically insulating resin sheet for motors, which process comprises a gas impregnation step of impregnating a non-reactive gas into a thermoplastic resin composition comprising at least a thermoplastic resin under pressure and a foaming step of foaming the thermoplastic resin composition by reducing the pressure after the gas impregnation step, thereby to produce a porous resin layer.

Especially in the process for producing an electrically insulating resin sheet for motors according to the present invention, the process comprises suitably a heating step of heating a porous resin layer at a temperature of 150 °C or higher after the foaming step.

Also in the process for producing an electrically insulating resin sheet for motors according to the present invention, the non-reactive gas is suitably carbon dioxide and the non-reactive gas is suitably impregnated in a supercritical state.

Further, in the present invention, there is provided another process for producing an electrically insulating resin sheet for motors, which process comprises a step of applying on a substrate a thermoplastic resin composition containing a thermoplastic resin and a phase separation agent that causes phase separation with a cured body of the thermoplastic resin, and drying or curing the composition to produce a thermoplastic resin sheet having a microphase-separated structure, and a step of removing the phase separation agent from the thermoplastic resin sheet, thereby to produce a porous resin sheet.

Especially, in the process for producing an electrically insulating resin sheet for motors according to the present invention, the phase separation agent is suitably removed by solvent extraction and the solvent is suitably one kind of solvents selected from liquefied carbon dioxide, subcritical carbon dioxide, or supercritical carbon dioxide.

EFFECT OF THE INVENTION

Since the electrically insulating resin sheet for motors according to the present invention is excellent in heat resistance as well as in electrical insulation and has a high partial discharge inception voltage, the present invention has the effects of suppressing the deterioration of the insulation member and prolonging the lifetime. Further, the process for producing an electrically insulating resin sheet for motors according to the present invention makes it possible to efficiently produce such an electrically insulating resin sheet for motors through a simple process.

BRIEF DESCRIPTION OF THE DRAWINGS

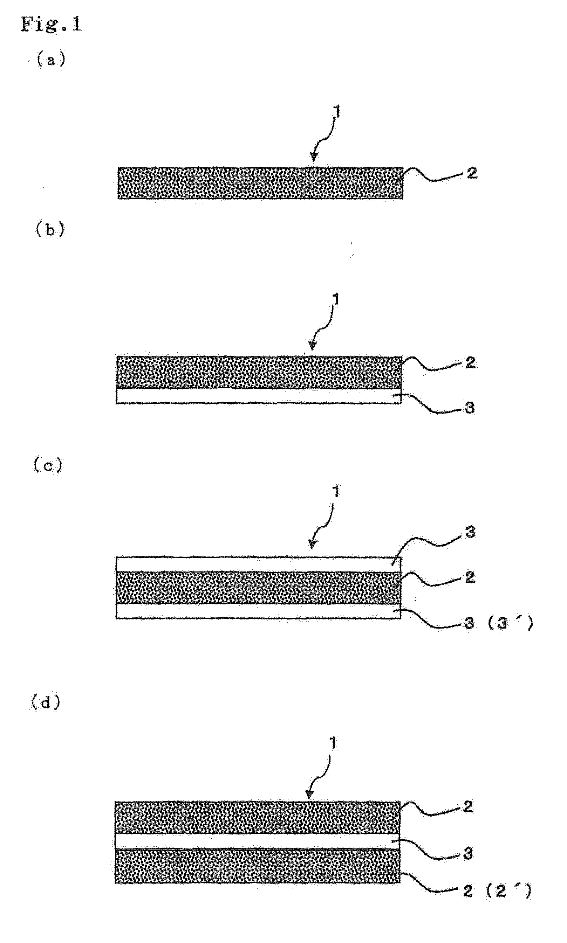

FIG. 1 is a cross-sectional view of one embodiment of the electrically insulating resin sheet for motors according to the present invention.

MODE FOR CARRYING OUT THE INVENTION

Hereinafter, embodiments of the present invention will be explained. The electrically insulating resin sheet for motors according to the present invention has a porous resin layer containing a thermoplastic resin and is characterized in that the resin sheet has a relative permittivity of 2.0 or less at 1 GHz. If the relative permittivity is 2.0 or less, it is possible to prevent an insulation breakdown by surge voltage resistance when the electrically insulating resin sheet is used as an insulating member of the motor.

This is because the partial discharge inception voltage that is the initial phenomenon of insulation breakdown can be increased. On the other hand, if the relative permittivity exceeds 2.0 at 1 GHz, the partial discharge inception voltage cannot be increased sufficiently. In the present invention, the relative permittivity at 1 GHz of the electrically insulating resin sheet for motors is preferably 1.9 or less, and more preferably 1.8 or less (usually 1.4 or more).

In the present invention, with respect to the relative permittivity of the electrically insulating resin sheet for motors, a complex permittivity at a frequency of 1 GHz was measured by the cavity resonator perturbation method and its real part was defined as the relative permittivity.

A strip-shaped sample (sample size: 2 mm x 70 mm length) was used for the measurement with a measurement equipment such as a cylindrical cavity resonator ("Network Analyzer N5230C", manufactured by Agilent Technologies, Inc.; "Cavity Resonator 1GHz", manufactured by Kanto Electronic Application and Development Inc.).

Thermoplastic Resin

The thermoplastic resin used in the present invention is not particularly limited, but a heat-resistant thermoplastic resin is preferable. In particular, a heat-resistant thermoplastic resin having a glass transition temperature of 150 °C or higher, preferably 180 °C or higher, is suitably used. Examples of such a thermoplastic resin include polyamide, polycarbonate, polybutylene terephthalate, polyethylene terephthalate, polyphenylene sulfide, polyarylate, polysulfone, polyether sulfone, polyether ether ketone, polyamideimide, polyimide, liquid crystal polymer, polyether imide, and the like. These thermoplastic resins may be used either alone or in combination with two or more kinds thereof.

In the present invention, particularly polyimide, polyether imide, and polyether sulfone among the above-mentioned thermoplastic resins can be suitably used because of their dimensional stability at high temperatures and high durability for long-term use. Also a combination use of a resin having a high glass transition temperature (for example, 220 °C or higher, or furthermore 230 °C or higher) with a resin having a low glass transition temperature (for example, 150 °C or higher, and lower than 220 °C) is preferred.

Thereby, fine cells can be formed while maintaining durability (possible improvement of processability). When thermoplastic resins each having a different glass transition temperature are used in combination, the blending ratio (by weight) of thermoplastic resin with high glass transition temperature/thermoplastic resin with low glass transition temperature is preferably about 20/80 to 80/20, more preferably about 30/70 to 70/30.

The polyimide can be obtained by a publicly known or common method. For example, polyimide can be obtained by synthesizing a polyimide precursor (polyamic acid) through the reaction of an organic tetracarboxylic acid dianhydride with a diamino compound (diamine) and subjecting the precursor to dehydrative cyclization.

The organic tetracarboxylic acid dianhydride includes, for example, pyromellitic acid dianhydride, 3,3',4,4'-biphenyltetracarboxylic acid dianhydride, 2,2-bis(2,3- dicarboxyphenyl)-1,1,1,3,3,3-hexafluoropropane dianhydride, 2,2-bis(3,4- dicarboxyphenyl)-1,1,1,3,3,3-hexafluoropropane dianhydride,2,2-bis(3,4-dicarboxyphenyl)-1, ,1,1,3,3,3-hexafluoropropane dianhydride, 3,3',4,4'-benzophenonetetracarboxylic acid dianhydride, bis(3,4-dicarboxyphenyl)ether dianhydride, bis(3,4-dicarboxyphenyl)sulfone dianhydride, and the like. These organic tetracarboxylic acid dianhydrides may be used alone or in combination with two or more kinds thereof.

The diamino compound includes, for example, m-phenylenediamine, p-phenylenediamine, 3,4'-diaminodiphenyl ether, 4,4'-diaminodiphenyl ether, 4,4'-diaminodiphenyl sulfone, 3,3'-diaminodiphenyl sulfone, 2,2-bis(4- aminophenoxyphenyl)propane, 2,2-bis(4- aminophenoxypheny)hexafluoropropane, 1,3-bis(4-aminophenoxy)benzene, 1,4-bis(4-aminophenoxy)benzene, 2,4- diaminotoluene, 2,6-diaminotoluene, diaminodiphenylmethane, 4,4'-diamino-2,2-dimethylbiphenyl, 2,2- bis(trifluoromethyl)-4,4'-diaminobiphenyl, and the like. These may be used alone or in combination with two or more kinds thereof.

For the raw material of polyimide used in the present invention, 3,3',4,4'-biphenyltetracarboxylic acid dianhydride is preferably used as an organic tetracarboxylic acid dianhydride, and p-phenylenediamine and/or 4,4'- diaminodiphenyl ether is/are preferably used as a diamino compound.

The polyimide precursor can be obtained by allowing to react an organic tetracarboxylic acid dianhydride with a diamino compound (diamine) usually in a substantially equimolar ratio in an organic solvent at 0 °C to 90 °C, for about 1 to 24 hours. Examples of the organic solvent include polar solvents, such as N-methyl-2-pyrrolidone, N,N- dimethylacetamide, N,N-dimethylformamide, and dimethyl sulfoxide.

The dehydrative cyclization reaction of the polyimide precursor is carried out by, for example, heating at about 300 °C to 400 °C or treatment with a dehydrative cyclization agent such as a mixture of pyridine and acetic anhydride. Generally, polyimide is insoluble in an organic solvent and is a polymer that is difficult to be molded. Therefore, when a porous body consisting of polyimide is produced, it is common to use the polyimide precursor as the polymer for the preparation of the polymer composition having the microphase-separated structure.

In addition to the above method, the polyimide can also be obtained by a method of subjecting a polyamic acid silyl ester obtained by the reaction of an organic tetracarboxylic acid dianhydride with an N-silylated diamine, to ring closure under heating.

The polyetherimide can be obtained by the dehydrative cyclization reaction between the diamino compound and an aromatic bisether anhydride such as 2,2,3,3-tetracarboxydiphenylene ether dianhydride, but commercially available products, for example, ULTEM resin (manufactured by SABIC) and SUPERIO resin (manufactured by Mitsubishi Plastics, Inc.) may be used.

The polyether sulfone can be obtained by polycondensation reaction of dichlorodiphenyl sulfone with potassium salt of dihydroxydiphenyl sulfone, but commercially available products, e.g., ULTRASONE E series (manufactured by BASF Corp.), RADEL A-series (manufactured by Solvay S.A.) may be used.

Other Components

In the present invention, the porous resin layer may contain, in addition to the thermoplastic resin, various additives in the range in which the effects of the present invention are not impaired. The kind of such additives is not particularly limited and includes general additives for plastics, such as tackifying resins, flame retardants, antioxidants, inorganic fillers, foaming nucleators, crystal nucleators, heat stabilizers, light stabilizers, ultraviolet absorbers, plasticizers, lubricants, pigments, crosslinking agents, crosslinking aids, and silane coupling agents. These additives can be used in an amount of, for example, 0.1 to 5 parts by weight per 100 parts by weight of the resin composition.

Production of Porous Resin Layer

The electrically insulating resin sheet for motors of the present invention comprises a porous resin layer containing a thermoplastic resin, and the porous resin layer can be obtained by making a porous product from a thermoplastic resin composition containing the thermoplastic resin and the other additives. The method of making a porous product is not particularly limited, and such a porous product can be obtained by a conventional well-known chemical foaming method or a physical foaming method.

However, in order to obtain a porous resin layer having a low relative permittivity of the present invention, it is preferred to uniformly form micro cells with a high porosity. From this point, either (1) a method of foaming with use of a non-reactive gas or (2) a method of extracting a phase separation agent that has been phase separated in a thermoplastic resin is preferable.

In these methods, since the reaction residue resulting from the foaming agent used in the case of chemical foaming does not remain and the bubbles become an independent cell structure, variations in electrical characteristics due to moisture absorption are less likely to occur.

The process for producing a porous resin layer according to the present invention comprises a gas impregnation step of impregnating a non-reactive gas into a thermoplastic resin composition containing a thermoplastic resin under pressure and a foaming step of foaming the thermoplastic resin composition by reducing the pressure after the gas impregnation step.

The gas impregnation step is a step of impregnating a non-reactive gas into a thermoplastic resin composition containing at least a thermoplastic resin under pressure, and the non-reactive gas includes, for example, carbon dioxide, nitrogen gas, air, and the like. These gases may be used alone or may be used as a mixture thereof.

Among these non-reactive gases, carbon dioxide is especially preferably used because the impregnated amount of the gas into the thermoplastic resin that is used as a material for the porous resin layer is large and the impregnation speed is fast.

Depending on the kinds of the non-reactive gases, the kinds of the thermoplastic resins or the thermoplastic resin compositions, the average cell diameter or the porosity of the target porous resin layers, it is necessary to appropriately adjust the pressure and temperature at the time of impregnating the non-reactive gas.

For example, in the case where carbon dioxide is used as the non-reactive gas and a polyimide is used as the thermoplastic resin, the pressure is about 7.4 to 100 MPa, preferably 20 to 50 MPa, and the temperature is about 120°C to 350 °C, preferably about 120 °C to 300 °C, in order to produce a porous resin layer having an average cell diameter of 5.0 $\mu$m or less and a porosity of 30 % or more.

Also in the case where, for example, carbon dioxide is used as the non-reactive gas and a polyetherimide is used as the thermoplastic resin, the pressure is about 7.4 to 100 MPa, preferably 20 to 50 MPa, and the temperature is about 120 °C to 260 °C, preferably about 120 °C, to 220 °C, in order to produce a porous resin layer having an average cell diameter of 5.0 $\mu$m or less and a porosity of 30 % or more.

The non-reactive gas is preferably in a supercritical state from the viewpoint of promoting the rate of impregnation into the polymer. For example, in the case of carbon dioxide, the critical temperature is 31 °C and the critical pressure is 7.4 MPa, and when carbon dioxide is brought to a supercritical state wherein the temperature is 31 °C or higher and the pressure is 7.4 MPa or higher, the solubility of carbon dioxide in the polymer is significantly increased and carbon dioxide can thereby be incorporated into the polymer to a higher concentration.

Further, since the gas concentration in the polymer is high when the gas in a supercritical state is impregnated, a larger number of cell nuclei are generated upon abrupt pressure drop and these cell nuclei can be grown up, resulting in higher cell density, thereby to obtain very minute cells.

The foaming step in the present invention is a step of foaming a thermoplastic resin composition by reducing the pressure after the gas impregnation step. By reducing the pressure, cell nuclei are generated in a large amount in the thermoplastic resin composition. The degree of decrease in the pressure (decompression rate) is not particularly limited, but the rate is approximately 5 MPa/see to 400 MPa/sec.

In the present invention, there may be provided a heating step of heating a porous resin layer comprising a thermoplastic resin composition wherein cell nuclei are formed by a foaming step, at a temperature of 150 °C or higher.

By heating the porous resin layer in which cell nuclei have been formed, cell nuclei grow and cells are formed. The heating temperature is preferably 180 °C or higher and is more preferably 200 °C or higher.

If the heating temperature is lower than 150 °C, it may be difficult to obtain a porous resin layer having a high porosity. It should be noted that after the heating step, quenching the porous resin layer may be performed so as to prevent the growth of cells or to secure the cell shape.

In the present invention, the gas impregnation step of impregnating under pressure the non-reactive gas into a thermoplastic resin composition comprising at least a thermoplastic resin and the foaming step of foaming a thermoplastic resin composition by reducing the pressure after the gas impregnation step may be performed by any of a batch method and a continuous method.

When using a the batch system, a foam body may be produced typically in the following manner. That is, a sheet containing a thermoplastic resin as a base resin is formed by extruding a thermoplastic resin composition comprising at least a thermoplastic resin through an extruder such as a single-screw extruder or twin-screw extruder.

Alternatively, a sheet containing a thermoplastic resin as a base resin is formed by uniformly kneading a thermoplastic resin composition comprising at least a thermoplastic resin in a kneading machine equipped with blades typically of roller, cam, kneader, or banbury type; and press-forming the kneadate into a predetermined thickness using, for example, a hot-plate press.

The resulting unexpanded sheet is placed in a pressure-tight vessel, into which a non-reactive gas composed of carbon dioxide, nitrogen, air, etc. is injected so that the non-reactive gas is impregnated into the unexpanded sheet. At the time when the unexpanded sheet is sufficiently impregnated with the non-reactive gas, the unexpanded sheet is released from the pressure (the pressure is usually lowered to atmospheric pressure) to thereby generate cell nuclei in the base resin. Then, after allowing the cells to grow by heating the cell nuclei, a heat-resistant polymer foam body is obtained by quenching with cold water to prevent the growth of cells and fix their shape.

According to the continuous system, for example, a non-reactive gas is injected while kneading a thermoplastic resin composition comprising at least a thermoplastic resin using an extruder such as a single-screw extruder or twin-screw extruder so that the non-reactive gas is sufficiently impregnated into the resin, and the resulting kneadate is extruded to release from the pressure (the pressure is usually lowered to atmospheric pressure), thereby to generate cell nuclei. Then, after allowing the cells to grow by heating the cell nuclei, a heat-resistant polymer foam body is obtained by quenching with cold water to prevent the growth of cells and fix their shape.

Another process for producing a porous resin layer of the present invention comprises a step of preparing a resin sheet having a microphase-separated structure by applying on a substrate a thermoplastic resin composition containing a thermoplastic resin and a phase separation agent that phase separates from a cured body of the thermoplastic resin, followed by curing, and a step of removing the phase separation agent from the resin sheet.

In the present invention, the component constituting the discontinuous phase of the microphase-separated structure (hereinafter referred to simply as "phase separation agent" in some cases) is compatible with the thermoplastic resin when mixed, and is a compound that phase separates from a cured body of the thermoplastic resin.

However, even in the case of a compound that phase separates from the thermoplastic resin component, such a compound can be used if it is brought to a homogenous state (a homogenous solution) by the addition of a suitable medium (for example, organic solvents) thereto.

Examples of such a phase separation agent include, for example, polyalkylene glycols such as polyethylene glycol and polypropylene glycol; those polyalkylene glycols terminated at one or each end by methyl or terminated at one or each end by (meth)acrylate; urethane prepolymers; and (meth)acrylate- based compounds such as phenoxypolyethylene glycol (meth)acrylate, $\varepsilon$-caprolactone (meth)acrylate, trimethylolpropane tri(meth)acrylate, dipentaerythritol hexa(meth)acrylate, urethane (meth)acrylates, epoxy (meth)acrylates, and oligoester (meth)acrylates. These phase separation agents can be used alone or in combination of two or more thereof.

In the present invention, it is possible to obtain a fine microphase-separated structure by using the phase separation agent, making it possible to adjust the average cell diameter of the porous resin layer to 5 $\mu$m or less.

The molecular weight of the phase separation agent is not particularly limited, but the weight average molecular weight is 10 000 or less, for example, preferably about 100 to 10 000, more preferably 100 to 2 000, from the viewpoint that later removal procedure becomes easy.

If the weight average molecular weight is less than 100, phase separation of the phase separation agent from a cured body of the resin component becomes difficult, whereas if the weight average molecular weight exceeds 10 000, microphase-separated structures become too large and it becomes difficult to remove the phase separation agent from the resin molded body.

The added amount of the phase separation agent can be appropriately selected depending on the combination of the phase separation agent and the resin component, but the phase separation agent may be used usually in an amount of 25 to 300 parts by weight, more preferably 30 to 200 parts by weight, per 100 parts by weight of the resin component, in order to achieve a porosity of 30 % or more in the porous resin molded body.

The process for producing a porous resin molded body of the present invention will be described in detail below.

First, a thermoplastic resin composition containing the thermoplastic resin component and the phase separation agent is applied onto a substrate.

In order to prepare a uniform thermoplastic resin composition, organic solvents such as aromatic hydrocarbons (e.g. toluene and xylene); alcohols (e.g. methanol, ethanol, and isopropyl alcohol); ketones (e.g. methyl ethyl ketone and acetone); and amides (e.g. N-methyl-2-pyrrolidone, dimethylacetamide, and dimethylformamide) may be used. The amount of the organic solvent used is usually 100 to 500 parts by weight, preferably 200 to 500 parts by weight, per 100 parts by weight of the resin component.

The base material is not particularly limited as long as it has a smooth surface, and includes, for example, plastic films, such as PET, PE, and PP; glass plates; and metal foils, such as stainless steel, copper, and aluminum. In order to produce a resin sheet continuously, a belt-like base material may be used.

The method for applying a thermoplastic resin composition onto a base material is not particularly limited, and a continuous coating method includes, for example, a wire bar method, a kiss coating method, and a gravure method. The method of coating in a batch system includes, for example, an applicator method, a wire bar method, and a knife coater method.

Next, a thermoplastic resin sheet wherein a phase separation agent is microphase separated is produced by curing a thermoplastic resin composition coated on a base material. The microphase-separated structure usually takes a sea-island structure wherein the resin component is regarded as a sea and the phase separation agent is regarded as an island.

When the thermoplastic resin composition does not contain a solvent, a curing treatment such as a thermal curing treatment is applied to the coated film to cure the thermoplastic resin component in the coated film so that the phase separation agent is insolubilized.

When the thermoplastic resin composition contains a solvent, such a solvent in the coated film may be evaporated (dried) to form a microphase-separated structure and then the thermoplastic resin component may be cured. Alternatively, after the thermoplastic resin component is cured, the solvent may be evaporated (dried) to form a microphase-separated structure. The temperature during evaporation (drying) of the solvent is not particularly limited and may be appropriately adjusted depending on the type of solvents used, but it is usually 10 °C to 250 °C, preferably 60 °C to 200 °C.

Next, a porous resin layer is prepared by removing the phase separation agent that was microphase-separated from the thermoplastic resin sheet. In addition, the thermoplastic resin sheet may be previously peeled off from the base material before removing the phase separation agent.

The method to remove the phase separation agent from the thermoplastic resin sheet is not particularly limited, but includes preferably a method of extracting the phase separation agent with a solvent. It is necessary to use a solvent that is a good solvent for the phase separation agent and does not dissolve the cured body of the thermoplastic resin component, and includes, for example, organic solvents (e.g., toluene, ethanol, ethyl acetate, and heptane), liquefied carbon dioxide, subcritical carbon dioxide, and supercritical carbon dioxide. The liquefied carbon dioxide, subcritical carbon dioxide, and supercritical carbon dioxide can remove the phase separation agent efficiently because they can easily penetrate into the resin sheet.

In the case of using liquefied carbon dioxide, subcritical carbon dioxide, or supercritical carbon dioxide as a solvent, a pressure vessel is usually used. The pressure vessel that can be use includes, for example, a batch type pressure vessel and a pressure vessel provided with a pressure-resistant device for feeding and winding a sheet. The pressure vessel is usually provided with a carbon dioxide supply means constituted by pump, piping, and valve.

The temperature and pressure during the extraction of the phase separation agent with liquefied carbon dioxide, subcritical carbon dioxide or supercritical carbon dioxide may be equivalent to or higher than the critical point of carbon dioxide, and are usually 32 °C to 230 °C and 7.3 to 100 MPa, respectively, and preferably 40 °C to 200 °C and 10 to 50 MPa, respectively.

The extraction may be carried out by feeding/discharging continuously liquefied carbon dioxide, subcritical carbon dioxide or supercritical carbon dioxide into/from a pressure vessel in which the thermoplastic resin sheet is placed, or may be carried out in a pressure vessel in a closed system (in a state where the charged resin sheet, liquefied carbon dioxide, subcritical carbon dioxide, or supercritical carbon dioxide does not move to the outside of the vessel). In the case of using supercritical carbon dioxide and subcritical carbon dioxide, swelling of the thermoplastic resin sheet is promoted and the diffusion coefficient of the insolubilized phase separation agent is improved, resulting in efficient removal of the phase separation agent from the thermoplastic resin sheet. In the case of using liquefied carbon dioxide, the diffusion coefficient decreases, but the phase separation agent is efficiently removed from the resin sheet because of improved permeability of the liquefied carbon dioxide to the thermoplastic resin sheet.

It is necessary to appropriately adjust the extraction time, depending on the temperature and pressure during extraction, the added amount of the phase separation agent, and the thickness of the resin sheet, but the extraction time is usually 1 to 10 hours, preferably 2 to 10 hours.

On the other hand, when extraction is carried out with an organic solvent as a solvent, the deformation of the porous resin layer as compared with the case where extraction is performed with liquefied carbon dioxide or supercritical carbon dioxide can be suppressed because the phase separation agent can be removed at atmospheric pressure.

It is also possible to shorten the extraction time when an organic solvent is used for the extraction. Furthermore, it is possible to continuously perform an extraction treatment of the phase separation agent by passing the thermoplastic resin sheet sequentially in an organic solvent.

The extraction method using an organic solvent includes, for example, a method of immersing a thermoplastic resin sheet in an organic solvent, a method of spraying an organic solvent to a thermoplastic resin sheet, and the like. From the viewpoint of removal efficiency of the phase separation agent, such an immersing method is preferred. In addition, the phase separation agent can be removed efficiently by replacing an organic solvent over a few times or performing the extraction with stirring.

The porous resin layer may be subjected to drying treatment and the like after removing the phase separation agent.

In the present invention, when a phase separation agent that can be evaporated or decomposed by heating is used, a method of removing a phase separation agent by evaporation or decomposition through heating may be combined prior to the extraction. The heating temperature when the phase separation agent is evaporated or decomposed by heating is generally 100 °C or higher, for example, 100 °C to 500 °C, preferably about 250 °C, to 450 °C, though it can be appropriately selected depending on the boiling point and decomposition point of the phase separation agent. Evaporation and decomposition procedures are preferably performed under reduced pressure (for example, 1 mmHg or lower) in order to increase the removal efficiency of the phase separation agent. Since the evaporation procedure or the decomposition procedure and the extraction procedure are performed in combination, the residue of the additive, which cannot be removed by one procedure, can be completely removed by the other procedure, thereby to obtain a porous body having a very low relative permittivity.

Porous Resin Layer

The relative permittivity at 1 GHz of the porous resin layer used in the electrically insulating resin sheet for motors according to the present invention is preferably 2.0 or less. If the relative permittivity of the porous resin layer is 2.0 or less, it is possible to adjust to 2.0 or less the relative permittivity at 1 GHz of the electrically insulating resin sheet for motors, and when the sheet is used as an insulating material for motors, insulation breakdown due to the surge voltage resistance can be prevented.

On the other hand, if the relative permittivity at 1 GHz exceeds 2.0, it becomes difficult to adjust the relative permittivity to 2.0 or less when the electrically insulating resin sheet for motors is configured. In the present invention, the relative permittivity at 1 GHz of the porous resin layer is preferably 1.9 or less and more preferably 1.8 or less (usually 1.4 or more). It should be noted that the relative permittivity is dependent on the relative permittivity peculiar to the porous resin layer, but it is possible to lower the permittivity by increasing the porosity.

In the present invention, the relative permittivity of the porous resin layer was determined by measuring a complex permittivity at a frequency of 1 GHz by the cavity resonator perturbation method and defining its real part as the relative permittivity. A strip-shaped sample (sample size: 2 mm x 70 mm length) was used for the measurement with a measurement equipment such as a cylindrical cavity resonator ("Network Analyzer N5230C", manufactured by Agilent Technologies, Inc.; "Cavity Resonator 1GHz", manufactured by Kanto Electronic Application and Development Inc.).

The thickness of the porous resin layer of the present invention is preferably 10 $\mu$m to 500 $\mu$m and more preferably 20 $\mu$m to 300 $\mu$m, If the thickness of the porous resin layer is in the range of 10 $\mu$m to 500 $\mu$m, there is an advantage such that insulation characteristics can be maintained in an electrically insulating resin sheet for motors. On the other hand, if the thickness of the porous resin sheet is less than 10 $\mu$m, insulation breakdown is likely to occur, and if the thickness of the porous resin layer exceeds 500 $\mu$m, there might occur a malfunction such that the motor output decreases due to the reduced number of turns of the coil wire.

The average cell diameter of the cells contained in the porous resin layer of the present invention is preferably 5.0 $\mu$m or less, more preferably 4.5 $\mu$m or less, and especially 4.0 $\mu$m or less (usually 0.01 $\mu$m or more). If the average cell diameter of the porous resin layer is 5.0 $\mu$m or less, there is an advantage such that the relative permittivity can be reduced without decreasing insulation characteristics and mechanical strength. If the average cell diameter of the porous resin layer exceeds 5.0 $\mu$m, its insulation characteristics and mechanical strength might decrease.

The average cell diameter of the cells contained in the porous resin layer of the present invention is determined by observing a section of the porous resin layer with a scanning electron microscope (SEM) ("S-3400N", manufactured by Hitachi, Ltd.), subjecting its image to a binarization with an image processing software ("WinROOF", manufactured by Mitani Corp.) to separate into the cell portion and the resin portion, and measuring the maximum vertical chord length of the cell. Then, the cell diameters for 50 cells from those having a larger cell diameter were averaged and the average was determined as an average cell diameter.

In addition, the porosity of the porous resin layer of the present invention is preferably 30 % or more and more preferably 40 % or more. If the porosity of the porous resin layer is 30 % or more, there is generated a state where uniform pores are present in the porous resin layer, resulting in the reduction of variation in dielectric properties, which is an advantage capable of achieving a low relative permittivity. If the porosity of the porous resin layer is less than 30 %, the pore-forming states is unbalanced so that variation in dielectric properties tends to easily occur, and therefore, the relative permittivity might not be reduced sometimes.

The porosity of the porous resin layer of the present invention was calculated from the following equation by measuring the specific gravity of a thermoplastic resin composition before porosification and the specific gravity of a porous resin layer after porosification.

$$\text{Porosity (\%)} = [1-(\text{Specific gravity of porous resin layer/Specific gravity of thermoplastic resin composition before porosification})] \times 100$$

Electrically Insulating Resin Sheet for Motors

Next, the electrically insulating resin sheet for motors of the present invention will be described with reference to FIG. 1.

FIG. 1 is a cross-sectional view of one embodiment of the electrically insulating resin sheet for motors of the present invention. In FIG. 1, FIG. 1(a) shows schematically a cross section cut in the thickness direction of the electrically insulating resin sheet for motors, said sheet being composed of only a porous resin layer, and FIG. 1(b) to FIG. 1(d) show schematically a cross section cut in the thickness direction of the electrically insulating resin sheet for motors, said sheet being further provided with other sheet material in addition to the porous resin layer.
There is no particular limitation to other shapes of the electrically insulating resin sheet for motors, and such a sheet may be sheet-shaped or tape-shaped, or may be processed by stamping into an appropriate shape as needed, or may be further subjected to a three-dimensional bending processing.

That is, FIG. 1(a) shows an electrically insulating resin sheet 1 for motors, which is formed of only a porous resin layer 2. The thickness of the porous resin layer 2 is as described above.

Further, FIG. 1(b) shows an electrically insulating resin sheet 1 for motors, wherein a sheet material 3 is arranged on one side of the porous resin layer 2. There is an advantage in that such an arrangement of the sheet material 3 improves the sliding property and strength of the electrically insulating resin sheet 1 for motors.

The sheet material 3 includes, for example, a nonwoven fabric, a paper, a film, or the like, but from the viewpoint of excellent heat resistance of the electrically insulating resin sheet for motors, a nonwoven fabric, a paper, or a heat-resistant film is preferable.

Moreover, in order to adjust the relative permittivity at 1 GHz of the electrically insulating resin sheet for motors to 2.0 or less, the sheet material 3 has preferably a low relative permittivity, for example, it is desirable for the sheet material 3 to have the relative permittivity at 1 GHz of 3.5 or less, preferably 3.0 or less.

The thickness of the sheet material 3 is not particularly limited, and is usually 5 to 100 $\mu$m, preferably 5 to 50 $\mu$m. If the thickness of the sheet material 3 is less than 5 $\mu$m, it becomes difficult to impart strength to the electrically insulating resin sheet for motors, and if the thickness of the sheet material 3 exceeds 100 $\mu$m, the thickness as the electrically insulating resin sheet for motors is increased to result in the reduction of number of turns of the coil wire, thereby to cause malfunctions such as decreased motor output and difficulty in lowering the relative permittivity of the electrically insulating resin sheet for motors.

As the sheet material 3, there are exemplified those (wet nonwoven fabric, etc.) produced by a wet-laid method and those (dry nonwoven fabric, and the like) produced by a dry method in the air. As the sheet material 3, a paper produced by the wet-laid method is preferable because the heat-resistance of an electrically insulating resin sheet for motors can become better.

The material of the paper includes synthetic polymer compounds (e.g. polyamide, polyester, etc.) and natural polymer compounds (e.g. cellulose, etc.), and polyamide is preferred under the aspect that the electrically insulating resin sheet for motors can have a more excellent heat-resistance.

Examples of the polyamide include a wholly aromatic polyamide wherein all the constituent monomers have aromatic hydrocarbons, an aliphatic polyamide wherein all the constituent monomers have only aliphatic hydrocarbons, and a semi-aromatic polyamide wherein some of the constituent monomers have aromatic hydrocarbons, and the wholly aromatic polyamide is preferable in view of the fact that the heat-resistance of the electrically insulating resin sheet for motors may be more excellent. That is, the sheet material 3 contains preferably a wholly aromatic polyamide.

Further, as the paper, a wholly aromatic polyamide paper comprising a wholly aromatic polyamide fiber is more preferred from the viewpoint of an excellent heat-resistance of the electrically insulating resin sheet for motors. That is, a wholly aromatic polyamide paper made by a wet-laid method using a wholly aromatic polyamide fiber is more preferable.

Examples of a wholly aromatic polyamide paper include, for example, those formed of mainly a wholly aromatic polyamide fiber obtained by forming a polycondensate of phenylenediamine and phthalic acid (wholly aromatic polyamide) into fibers, in which a portion except an amide group in the polycondensate is composed of a benzene ring.

The wholly aromatic polyamide paper has preferably a basis weight of 5 g/m$^2$ or more from the viewpoint of excellent mechanical properties and good handling in the production process of the electrically insulating resin sheet for motors. At a basis weight of 5 g/m$^2$ or more, advantageously, insufficient mechanical strength is avoided, and thus the electrically insulating resin sheet for motors is difficult to break during the production.

Other components may be added to the wholly aromatic polyamide paper to the extent not to impair the effects of the present invention, and such other components include organic fibers, such as polyphenylene sulfide fibers, polyether ether ketone fibers, polyester fibers, arylate fibers, liquid crystal polyester fibers, and polyethylene naphthalate fibers; and inorganic fibers, such as glass fibers, rock wool, asbestos, boron fibers, and alumina fibers.

As the wholly aromatic polyamide paper, commercially available products, such as NOMEX (trade name) manufactured by DuPont, can be used.

A heat-resistant film can also be used as the sheet 3, and a heat-resistant film made of a thermoplastic resin having a glass transition temperature of 150 °C or higher is suitably used because the heat resistance and strength of the electrically insulating resin sheet for motors can be more excellent.

Examples of such films include, for example, polyamide, polycarbonate, polybutylene terephthalate, polyethylene terephthalate, polyphenylene sulfide, polyarylate, polysulfone, polyether sulfone, polyether ether ketone, polyamide imide, polyimide, polyether imide, and the like.

Further, FIG. 1(c) shows an electrically insulating resin sheet 1 for motors, wherein a sheet material 3 is arranged on both sides of a porous resin layer 2. In this case, the sheet material 3 arranged on the porous resin layer 2 may be the same or different sheet materials on both sides. That is, the sheet material 3 may be arranged on one surface of the porous resin layer 2 and the same sheet material 3 may be arranged on the other surface.

Alternatively, the sheet material 3 may be arranged on one surface of the porous resin layer 2 and a different sheet material 3' may be arranged on the other surface. The sheet materials described above can be used for these sheet materials 3 and 3'.

FIG. 1(d) shows an electrically insulating resin sheet 1 for motors, wherein a porous resin layer 2 is arranged on both sides of a sheet material 3. In this case, the porous resin layer 2 arranged on the sheet material 3 may be the same or different porous resin layers on both sides. That is, the porous resin layer 2 may be arranged on one surface of the sheet material 3 and the same porous resin layer 2 may be arranged on the other surface. Alternatively, the porous resin layer 2 may be arranged on one surface of the sheet material 3 and a different porous resin layer 2' may be arranged on the other surface.

Note that in an electrically insulating resin sheet for motors, wherein a sheet material 3 is arranged on a porous resin layer 2 as shown in Figs. 1(b), 1(c), and 1(d), an adhesive or a pressure-sensitive adhesive may be appropriately used so as to arrange the sheet material 3 on the porous resin layer 2 (not shown) as long as it does not impair the effects of the present invention.

The adhesive or pressure-sensitive adhesive used for such a purpose is not particularly limited, and those that are conventionally well-known can be used and include, for example, epoxy adhesives, urethane adhesives, acrylic adhesives, and the like.

Corona treatment can be applied to the side of the porous resin layer 2 of the sheet material 3. By performing the corona treatment, advantageously, delamination between the sheet material 3 and the porous resin layer 2 can be suppressed. The corona treatment is a surface roughening treatment by performing a discharging treatment on one of the surfaces of the sheet material 3 in contact with the porous resin layer 2 to generate a polar carboxyl group or a hydroxyl group. As the corona treatment, known ordinary methods can be adopted.

The thickness of the electrically insulating resin sheet 1 for motors of the invention is preferably 10 to 500 μm, more preferably 20 to 300 μm. If the thickness of the electrically insulating resin sheet 1 for motors is in the range of 10 to 500 μm, there is an advantage such that insulation characteristics can be maintained in the electrically insulating resin sheet for motors. On the other hand, if the thickness of the porous resin sheet is less than 10 μm, insulation breakdown is likely to occur, and if the thickness exceeds 500 μm, there might occur a malfunction such that the motor output decreases due to the reduced number of turns of the coil wire.

EXAMPLES

The present invention will be described below by way of Examples, without intending to limit the present invention thereto in any way.

Measurement and Evaluation Method

Relative Permittivity

The relative permittivity was determined by measuring a complex permittivity at a frequency of 1 GHz by the cavity resonator perturbation method and defining its real part as the relative permittivity. A strip-shaped sample (sample size: 2 mm x 70 mm length) was used for the measurement with a measurement equipment such as a cylindrical cavity resonator ("Network Analyzer N5230C", manufactured by Agilent Technologies, Inc.; "Cavity Resonator 1 GHz", manufactured by Kanto Electronic Application and Development Inc.).

Average Cell Diameter

The porous resin layer was cooled with liquid nitrogen and cut perpendicularly to the sheet surface by using a knife to prepare an evaluation sample. The cut surface of the sample is subjected to Au vapor deposition and the cut surface was observed with a scanning electron microscope (SEM) ("S-3400N", manufactured by Hitachi, Ltd.). Its image was binarized with an image processing software ("WinROOF", manufactured by Mitani Corp.) to separate into the cell portion and the resin portion, and the maximum vertical chord length of the cell was measured. Then, the cell diameters for 50 cells from those having a larger cell diameter were averaged and the average was determined as an average cell diameter.

Porosity

The specific gravity of a thermoplastic resin composition before foaming and the specific gravity of a porous resin layer after foaming were measured with a gravimeter ("MD-300S", manufactured by Alfa Mirage Co., Ltd.), and the porosity was calculated from the following equation.

$$\text{Porosity (\%)} = [1-(\text{Specific gravity of porous resin layer/Specific gravity of thermoplastic resin composition before porosification})] \times 100$$

Partial Discharge Inception Voltage

A sample cut into 50 mm x 50 mm was sandwiched between a brass electrode and a stainless steel plate and connected to an AC power supply. A voltage was applied from 0 kV at 200 V/sec, and an applied voltage (discharge inception voltage) Vpeak was measured, when a charge amount showed 100 Pc. In the present invention, at least 1200 Vpeak is desirable for the partial discharge inception voltage.

Evaluation of Heat Resistance

A test sample was prepared by cutting the sheet into 15 mm width along the flow direction of the sheet. The prepared sample was left for 1000 hours in a constant temperature bath which had been heated to 220 °C. For the samples before and after allowing to stand in the constant temperature bath, a tensile strength test was carried out according to the "tensile strength" of JIS C2151, at 23 °C under the conditions of a rate of 200 mm/min and a gauge line of 100 mm, thereby to measure the tensile strength. A residual tensile strength was calculated by the following expression.

$$\text{Residual tensile strength (\%)} = [(\text{Tensile strength after allowing to stand})/(\text{Tensile strength before allowing to stand})] \times 100$$

In the present invention, the residual tensile strength obtained by the above evaluation is preferably 50 % or more.

Example 1

A single-layer sheet of 120 $\mu$m thickness was prepared from a polyetherimide resin (manufactured by SABIC, trade name "ULTEM 1000", Tg 217 °C, specific gravity 1.27) by a twin-screw extruder. The unfoamed single layer sheet was placed in a 500 cm$^3$ pressure vessel, and impregnated with carbon dioxide by keeping the vessel in a carbon dioxide atmosphere of 200 °C and 25 MPa for 0.5 hour.

Then, after having returned this sheet to atmospheric pressure at a rate of 300 MPa/sec, a porous resin layer made of polyetherimide of 200 $\mu$m thickness was obtained. The obtained porous resin layer had an average cell diameter of 4.1 $\mu$m, a porosity of 55 %, and a relative permittivity of 1.8 (at a frequency of 1 GHz).

Example 2

A polyetherimide resin (manufactured by SABIC, trade name "ULTEM 1000", Tg 217 °C, specific gravity 1.27) and a polypropylene glycol as a phase separation agent (manufactured by NOF Corporation, trade name "UNIOL D-400", average molecular weight 400) in the weight ratio of 100:75 were dissolved in N-methyl-2-pyrrolidone (NMP)to obtain a thermoplastic resin composition having a solid concentration of 20 %. This thermoplastic resin composition was applied using an applicator, and dried at 110 °C for 10 minutes afterwards to evaporate off NMP, thereby to obtain a thermoplastic resin sheet of 100 $\mu$m thickness.

The thermoplastic resin sheet was placed in a 500 cm$^3$ pressure vessel, and carbon dioxide was injected thereto at a flow rate of about 15 L/min as the gas amount in an atmosphere of 25 °C while keeping the increased pressure of 25 MPa. After evacuation of the carbon dioxide, an extraction procedure for polypropylene glycol was carried out for 5 hours to make a porous resin layer composed of polyetherimide of 100 $\mu$m thickness. The average cell diameter of the porous resin layer obtained was 3.2 $\mu$m, the porosity was 66 %, and the relative permittivity was 1.7 (1 GHz).

Example 3

A porous resin layer having a 200 $\mu$m thickness was obtained in the same manner as in Example 1, except that a single layer sheet having a 120 $\mu$m thickness was obtained by kneading a polyetherimide resin (manufactured by SABIC, trade name "ULTEM 1000", Tg 217 °C, specific gravity 1.27) and a polyetherimide resin (manufactured by SABIC, trade name "ULTEM XH6050", Tg 247 °C, specific gravity 1.30) in a twin-screw extruder so that the ratio of both polyetherimide resins became 40:60 by mass. The average cell diameter of the porous resin layer obtained was 3.9 $\mu$m, the porosity was 49 %, and the relative permittivity was 1.9 (1 GHz).

Comparative Example 1

A non-porous resin layer consisting of polyetherimide having a 100 $\mu$m thickness was obtained in the same manner as in Example 2, except that the phase separation agent was not added. The relative permittivity of the non-porous resin layer obtained was 2.7 (1 GHz).

Comparative Example 2

A non-porous film of polyethylene naphthalate (PEN) (manufactured by Teijin DuPont Films Japan Limited, trade name "TEONEX 100 $\mu$m") was taken as an electrically insulating resin sheet.

The evaluation results in each of Examples and Comparative Examples are shown in Table 1.

Table 1

|  |  | Example 1 | Example 2 | Example 3 | Comparative Example 1 | Comparative Example 2 |
|---|---|---|---|---|---|---|
|  |  | PEI, Porous | PEI, Porous | PEI mixture, porous | PEI, Non-porous | PEN, Non-porous |
| Thickness | (mm) | 200 | 100 | 200 | 100 | 100 |
| Average cell diameter | ($\mu$m) | 4.1 | 3.2 | 3.9 | - | - |
| Porosity | (%) | 55 | 66 | 49 | - | - |
| Relative permittivity (1 GHz) |  | 1.8 | 1.7 | 1.9 | 2.7 | 2.9 |

(continued)

| | | Example 1 | Example 2 | Example 3 | Comparative Example 1 | Comparative Example 2 |
|---|---|---|---|---|---|---|
| | | PEI, Porous | PEI, Porous | PEI mixture, porous | PEI, Non-porous | PEN, Non-porous |
| Partial discharge inception voltage | Vpeak | 1700 | 1250 | 1650 | 1055 | 1020 |
| Residual tensile strength | % | 58 | 55 | 95 | 57 | 48 |

In Examples 1 to 3, it was confirmed that the relative permittivity could be adjusted to 2.0 or less by the formation of pores and the partial discharge inception voltage could be increased as compared with the non-porous resin layer of the same thickness. As for heat resistance, a high heat resistance of the porous resin layer similar to that of the non-porous resin layer was also confirmed in Examples 1 and 2. Particularly, in Example 3, it was confirmed that a porous resin layer having an improved heat resistance and a high residual tensile strength could be prepared.

DESCRIPTION OF REFERENCE SIGNS

1     = Electrically insulating resin sheet for motors
2     = Porous resin layer
2'    = Porous resin layer
3     = Sheet material
3'    = Sheet material

**Claims**

1.  An electrically insulating resin sheet for motors, which has a porous resin layer containing a thermoplastic resin, wherein the resin sheet has a relative permittivity of 2.0 or less at 1 GHz.

2.  The electrically insulating resin sheet for motors according to claim 1, wherein the porous resin layer has an average cell diameter of 5.0 $\mu$m or less and contains cells in such an amount that the porosity is 30 % or more.

3.  The electrically insulating resin sheet for motors
    according to claim 1 or 2,
    wherein the thermoplastic resin is any one selected from polyimide, polyether imide, and polyether sulfone.

4.  The electrically insulating resin sheet for motors
    according to any one of claims 1 to 3,
    wherein the thermoplastic resin is a mixture of two or more kinds of the thermoplastic resins that are different in their glass transition temperatures.

5.  The electrically insulating resin sheet for motors
    according to any one of claims 1 to 4,
    wherein a sheet material is provided on at least one surface of the porous resin layer.

6.  A process for producing the electrically insulating resin sheet for motors according to any one of claims 1 to 5, which process comprises

        - a gas impregnation step of impregnating a non-reactive gas into a thermoplastic resin composition containing a thermoplastic resin under pressure and

- a foaming step of foaming the thermoplastic resin composition by reducing the pressure after the gas impregnation step, thereby to produce a porous resin layer.

7. The process for producing an electrically insulating resin sheet for motors according to claim 6, which process comprises a heating step of heating a porous resin layer at a temperature of 150 °C or higher after the foaming step.

8. The process for producing an electrically insulating resin sheet for motors according to claim 6 or 7, wherein the non-reactive gas is carbon dioxide.

9. The process for producing an electrically insulating resin sheet for motors according to any one of claims 6 to 8, wherein the non-reactive gas is impregnated in a supercritical state.

10. A process for producing the electrically insulating resin sheet for motors according to any one of claims 1 to 5, which process comprises a step of applying on a substrate a thermoplastic resin composition containing a thermoplastic resin and a phase separation agent that causes phase separation from a cured body of the thermoplastic resin, and drying or curing the composition to produce a thermoplastic resin sheet having a microphase-separated structure, and a step of removing the phase separation agent from the thermoplastic resin sheet, thereby to produce a porous resin layer.

11. The process for producing an electrically insulating resin sheet for motors according to claim 10, wherein the phase separation agent is removed by solvent extraction.

12. The process for producing an electrically insulating resin sheet for motors according to claim 11, wherein the solvent is one kind of solvents selected from liquefied carbon dioxide, subcritical carbon dioxide, or supercritical carbon dioxide.

Fig.1

(a)

(b)

(c)

(d)

<table>
<tr><td colspan="2" align="center">**INTERNATIONAL SEARCH REPORT**</td><td>International application No.<br>PCT/JP2012/052401</td></tr>
</table>

| A. CLASSIFICATION OF SUBJECT MATTER |
|---|
| *H02K3/34*(2006.01)i, *H01B3/30*(2006.01)i |
| |
| According to International Patent Classification (IPC) or to both national classification and IPC |

| B. FIELDS SEARCHED |
|---|
| Minimum documentation searched (classification system followed by classification symbols)<br>H02K3/34, H01B3/30 |
| |
| Documentation searched other than minimum documentation to the extent that such documents are included in the fields searched<br>    Jitsuyo Shinan Koho        1922-1996   Jitsuyo Shinan Toroku Koho   1996-2012<br>    Kokai Jitsuyo Shinan Koho   1971-2012   Toroku Jitsuyo Shinan Koho   1994-2012 |
| |
| Electronic data base consulted during the international search (name of data base and, where practicable, search terms used) |
| |

| C. DOCUMENTS CONSIDERED TO BE RELEVANT | | |
|---|---|---|
| Category* | Citation of document, with indication, where appropriate, of the relevant passages | Relevant to claim No. |
| Y | JP 10-159730 A (Techno Oonishi Co., Ltd.),<br>16 June 1998 (16.06.1998),<br>claims; paragraphs [0010] to [0015], [0020];<br>fig. 1 to 3<br>(Family: none) | 1-12 |
| Y | JP 2007-291202 A (Shin-Etsu Polymer Co., Ltd.),<br>08 November 2007 (08.11.2007),<br>claims; paragraphs [0033], [0041], [0045] to<br>[0098]<br>(Family: none) | 1-12 |
| Y | JP 2010-138391 A (Mitsui Chemicals, Inc.),<br>24 June 2010 (24.06.2010),<br>claims; paragraphs [0023] to [0035], [0077]<br>& US 2010/0144912 A1 | 4 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    29 March, 2012 (29.03.12) | Date of mailing of the international search report<br>    10 April, 2012 (10.04.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/052401 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-18897 A  (Nitto Denko Corp.),<br>27 January 2011 (27.01.2011),<br>claims<br>& WO 2010/143687 A1 | 10-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9023601 A

- JP 2006321183 A